# EUROPÄISCHE PATENTSCHRIFT

(11) **EP 3 795 462 B1**
(45) Veröffentlichungstag und Bekanntmachung des Hinweises auf die Patenterteilung: **08.06.2022**
(21) Anmeldenummer: 19198537.3
(22) Anmeldetag: 20.09.2019
(51) Int. Cl.: B62K 19/34, B62M 6/55, F16B 5/02

(54) **ELEKTROFAHRRAD-ANTRIEBSEINHEITS-BEFESTIGUNGSANORDNUNG**
ELECTRIC BICYCLE DRIVE UNIT ATTACHMENT ASSEMBLY
DISPOSITIF DE FIXATION D'UNE UNITÉ D'ENTRAINEMENT DE BICYCLETTE ÉLECTRIQUE

(43) Veröffentlichungstag der Anmeldung: 24.03.2021
(73) Patentinhaber: Amprio GmbH, 41460 Neuss (DE)
(72) Erfinder: HEMSING, Axel, 41460 Neuss (DE); OTZEN, Kai, 41460 Neuss (DE); GREVEN, Dietmar, 41460 Neuss (DE)
(74) Vertreter: terpatent Patentanwälte ter Smitten Eberlein-Van Hoof Rütten Daubert

(56) Entgegenhaltungen:
- EP-A1- 3 239 029
- DE-A1-102016 115 681
- DE-A1-102017 201 617

## Beschreibung

Die Erfindung bezieht sich auf eine Elektrofahrrad-Antriebseinheits-Befestigungsanordnung zur Befestigung einer Elektrofahrrad-Antriebseinheit an dem Fahrradrahmen des Elektrofahrrads.

Unter einem Elektrofahrrad ist vorliegend jeder Fahrradtyp zu verstehen, der eine unterstützende elektrische Antriebseinheit aufweist, die die von einem Fahrer in die Tretkurbel eingeleitete humane Antriebsleistung durch eine entsprechende elektrische Antriebsleistung ergänzt, soweit dies gewünscht ist. Insbesondere bezieht sich die vorliegende Erfindung auf eine Befestigungsanordnung für sogenannte Mittelmotor-Antriebseinheiten, die sowohl die Tretkurbelwelle rotatorisch lagern als auch ein Abtriebselement aufweisen, beispielsweise mindestens ein Kettenblatt, das ein Rad des Elektrofahrrads antreibt. Insbesondere bei derartigen Mittelmotor-Antriebseinhelten können kurzzeitig sehr hohe mechanische Kräfte auf die Antriebseinheit einwirken, die durch die Befestigungsanordnung auf den Fahrradrahmen übertragen werden.

Der Hersteller von Elektrofahrrad-Antriebseinheiten ist in der Regel nicht identisch mit dem Hersteller des Elektrofahrrads, in das die Antriebseinheit eingebaut ist. Aus diesem Grunde sind Elektrofahrrad-Antriebseinheiten in aller Regel mechanisch als weitgehend eigenständiges Module aufgebaut, so dass für ihre Integration in einen Fahrradrahmen nur eine relativ einfache mechanische Befestigungsanordnung festgelegt wird.

Hierbei hat sich eine Befestigungsanordnung bewährt, die an dem Fahrradrahmen zwei sich in Fahrrad-Längsrichtung erstreckende und in einer Vertikalebene stehende Rahmenschenkel aufweist, die in Querrichtung beabstandet zueinander angeordnet sind. Zwischen den beiden Rahmenschenkeln sind zwei hierzu parallele korrespondierende Gehäuseflansche der Antriebseinheit vorgesehen, die mit mehreren in Querrichtung in entsprechenden Öffnungen und Bohrungen steckenden Bolzen und Schrauben an den Rahmenschenkeln befestigt sind. Bei der Montage der Antriebseinheit an dem Fahrradrahmen wird zunächst der Festlager-Gehäuseflansch innenseitig an dem korrespondierenden Festlager-Rahmenschenkel derart befestigt, dass der Festlager-Rahmenschenkel unmittelbar und kraftschlüssig an dem Festlager-Gehäuseflansch anliegt. Da die Hersteller der Antriebseinheiten einerseits und der Fahrradrahmen andererseits in der Regel nicht identisch sind, kommt es aufgrund von fertigungsbedingten Toleranzen zwischen dem Loslager-Rahmenschenkel und dem korrespondierenden Loslager-Gehäuseflansch in der Praxis zu einem Toleranzspalt, der bei der Befestigung des Loslager-Gehäuseflansches an dem Loslager-Rahmenschenkel ausgeglichen werden muss.

Aus DE 10 2016 112 778 A1 sind mehrere Toleranzspalt-ausgleichende Befestigungsanordnungen bekannt. Bei einer dieser Befestigungsanordnungen steckt in einer Querbohrung des Loslager-Gehäuseflansches eine in Fahrrad-Querrichtung verschiebbare Gewindehülse, in die eine aus distaler Richtung durch eine korrespondierende Öffnung des Loslager-Rahmenschenkels eingesteckte Gewindeschraube eingeschraubt wird, die hierdurch die Gewindehülse in den Toleranzspalt hineinzieht, bis die Gewindehülse an der Innenseite des Loslager-Rahmenschenkels anschlägt. Für die Realisierung dieser Loslager-Befestigung sind also zwei separate Bauteile erforderlich, nämlich die verschiebbare Gewindehülse und die korrespondierende Gewindeschraube.

Das Dokument DE102017201617A1 offenbart eine weitere Befestigungsanordnung mit allen Merkmalen des Oberbegriffs des unabhängigen Anspruchs 1.

Aufgabe der Erfindung ist es vor diesem Hintergrund, eine vereinfachte Elektrofahrrad-Antriebseinheits-Befestigungsanordnung zu schaffen.

Diese Aufgabe wird erfindungsgemäß gelöst mit einer Elektrofahrrad-Antriebseinheits-Befestigungsanordnung mit den Merkmalen des Anspruchs 1.

Die Befestigungsanordnung weist an dem Fahrradrahmen mindestens einen Festlager-Rahmenschenkel, der vorzugsweise einstückig mit dem Fahrradrahmen ausgebildet ist, und mindestens einen hierzu parallelen Loslager-Rahmenschenkel auf, der vorzugsweise einstückig mit einem Antriebseinheits-Gehäuse ausgebildet ist. Das Antriebseinheits-Gehäuse, in dem in der elektrische Traktionsmotor angeordnet ist, weist mindestens einen Festlager-Gehäuseflansch und mindestens einen hierzu parallelen Loslager-Gehäuseflansch auf, wobei die beiden Gehäuseflansche in vertikalen Parallelebenen zu den beiden Rahmenschenkeln stehen. Der Festlager-Gehäuseflansch liegt unmittelbar an dem Festlager-Rahmenschenkel an und ist mit diesem mit einem oder mehreren Festlager-Befestigungselementen kraftschlüssig verbunden. Unter einer kraftschlüssigen Verbindung ist vorliegend ein unmittelbarer Kontakt zwischen dem Festlager-Gehäuseflansch und dem Festlager-Rahmenschenkel zu verstehen, über den im Idealfall auch sehr hohe parallel zu der und in der Kontaktebene auftretende Kräfte übertragen werden. Bei einem aufrechtstehenden Fahrradrahmen stehen die Grundebenen der Rahmenschenkel und der Gehäuseflansche ungefähr in Vertikalebenen.

Zur Befestigung des Loslager-Gehäuseflansches an dem Loslager-Rahmenschenkel ist mindestens ein spezielles Loslager-Befestigungselement vorgesehen, das geeignet ist, einen in der Praxis unvermeidlichen Toleranzspalt verschiedener Größe zwischen dem Loslager-Gehäuseflansch und dem Loslager-Rahmenschenkel zuverlässig und mit hoher mechanischer Festigkeit zu überbrücken.

Hierzu ist das Loslager-Befestigungselement als Loslager-Gewindebolzen ausgebildet, der einen zylindrischen Bolzenkopf aufweist, der radialspielfrei in einer korrespondierenden Loslager-Zylinderbohrung des Loslager-Rahmenschenkels sitzt. Der Bolzenkopf sitzt also radialspielfrei und vorzugsweise mit Klemmsitz in der Loslager-Zylinderbohrung, wobei der Bolzenkopf mit Hilfe eines entsprechenden Drehschlüssels jedoch gedreht werden kann. Der Loslager-Gewindebolzen weist ferner einen Gewindeabschnitt mit einem Außengewinde auf, der in einem korrespondierenden Innengewinde an dem Festlager-Rahmenschenkel oder an einem der beiden Gehäuseflansche verschraubt ist.

Bei der Montage der Antriebseinheit an dem Fahrradrahmen wird das Innengewinde zunächst koaxial ausgerichtet mit der Loslager-Zylinderbohrung, woraufhin der Loslager-Gewindebolzen von distal in Querrichtung nach proximal in die Loslager-Zylinderbohrung des Loslager-Rahmenschenkels eingeschoben wird, so dass das Gewindebolzen-Außengewinde des Gewindeabschnitts in Eingriff kommt mit dem korrespondierenden Innengewinde. Der Loslager-Gewindebolzen wird dann mit Hilfe des Drehschlüssels in das korrespondierende Innengewinde eingeschraubt, wodurch der Gewindebolzen-Bolzenkopf in die korrespondierende Loslager-Zylinderbohrung hineingezogen wird. Sobald der Loslager-Gewindebolzen seine Endposition erreicht, beispielsweise durch Anschlagen des Bolzenkopfes an dem Loslager-Gehäuseflansch, ist die Loslager-Verbindung hergestellt.

Unter dem Begriff "Loslager" ist vorliegend stets die Seite der Befestigungsanordnung im montierten Zustand zu verstehen, bei der der Gehäuseflansch und der Rahmenschenkel bezüglich von in der Vertikalebene beziehungsweise in den Ebenen des Loslager-Gehäuseflansches bzw. des Loslager-Rahmenschenkels liegenden Kräfte im Vergleich zu der Festlagerseite keinen nennenswerten Kraftschluss haben.

Die Loslager-Verbindung zwischen dem Loslager-Rahmenschenkel und dem Loslager-Gehäuseflansch kann also durch ein einziges einstückiges Loslager-Befestigungselement hergestellt werden, das auf elegante Weise den Toleranzspalt überbrückt, und dabei eine insbesondere bezüglich vertikaler Übertragungskräfte stabile Verbindung herstellt, die auch bei einem hohen Fahrergewicht die insbesondere über die Tretkurbel-Welle in die Antriebseinheit eingeleiteten großen statischen und dynamischen Kräfte überträgt.

Vorzugsweise ist vorgesehen, dass das Innengewinde, mit dem der Gewindebolzen-Gewindeabschnitt verschraubt ist, dem Festlager-Rahmenschenkel zugeordnet ist bzw. in diesem vorgesehen ist. Der Loslager-Gewindebolzen durchdringt also sowohl die beiden Gehäuseflansche als auch die beiden Rahmenschenkel, und presst die beiden Gehäuseflansche sowie den Festlager-Rahmenschenkel sandwichartig zusammen. Der Loslager-Gewindebolzen sorgt dafür, dass der Festlager-Gehäuseflansch kraftschlüssig auf den zugeordneten Festlager-Rahmenschenkel angedrückt wird, sodass zwischen dem Festlager-Rahmenschenkel und dem Festlager-Gehäuseflansch eine kraftschlüssige Verbindung hergestellt ist. Der Loslager-Gewindebolzen stellt sowohl die Loslager-Befestigung als auch die gegenüberliegende Festlager-Befestigung her. Auf diese Weise kann mit nur einem einzigen Befestigungselement und mit nur einem einzigen Montageschritt sowohl die Festlager-Verbindung als auch die gegenüberliegende Loslager-Verbindung hergestellt, wodurch die Herstellungskosten und der Montageaufwand reduziert sind.

Gemäß einer bevorzugten Ausgestaltung ist an dem Festlager-Rahmenschenkel eine separate Gewindemutter drehfest angeordnet, die das dem Festlager-Rahmenschenkel zugeordnete Innengewinde aufweist. Das dem Festlager-Rahmenschenkel zugeordnete Innengewinde ist also nicht unmittelbar in dem Festlager-Rahmenschenkel-Körper ausgebildet, sondern wird durch eine separate Gewindemutter gebildet, die beispielsweise in einer entsprechend komplementär ausgeformten Ausnehmung in dem Festlager-Rahmenschenkel drehfest gelagert ist. Die Gewindemutter kann in der erforderlichen Materialqualität und Präzision von dem Hersteller der Antriebseinheit zur Verfügung gestellt werden, sodass der Antriebseinheit-Hersteller die Kontrolle über die Qualität dieser Verbindung hat.

Vorzugsweise weisen die beiden Gehäuseflansche jeweils eine gewindelose Steckbohrung auf, durch die ein Bolzenschaft des Loslager-Gewindebolzens hindurch gesteckt ist. Der Loslager-Gewindebolzen-Gewindeabschnitt wird bei der Montage also durch die beiden gewindelosen Steckbohrungen hindurch gesteckt, um schließlich in das korrespondierende Innengewinde am Festlager-Rahmenschenkel eingeschraubt zu werden.

Besonders bevorzugt liegen die beiden Gehäuseflansche mit ihren proximalen Seiten unmittelbar aneinander an, sodass durch den Loslager-Gewindebolzen auch die beiden Gehäusehälften des Antriebseinheits-Gehäuses, wovon die eine Gehäusehälfte den Festlager-Gehäuseflansch und die andere Gehäusehälfte den Loslager-Gehäuseflansch aufweist, aufeinander gedrückt und auf diese Weise miteinander verbunden werden.

Vorzugsweise ist der Außendurchmesser des Bolzenkopfes erheblich größer als der Außendurchmesser des Gewindeabschnitts, wobei die hierdurch gebildete proximale Bolzenkopf-Ringstufe zwischen dem Bolzenkopf und dem Bolzenschaft bzw. dem Gewindeabschnitt an einem Öffnungsrand des Loslager-Gehäuseflansches unmittelbar und mit Kraftschluss anliegt.

Gemäß einer bevorzugten alternativen Ausgestaltung ist das mit dem Gewindebolzen-Gewindeabschnitt korrespondierende Innengewinde nicht an dem Festlager-Rahmenschenkel vorgesehen, sondern an dem korrespondierenden Loslager-Gehäuseflansch vorgesehen. Das Innengewinde ist besonders bevorzugt unmittelbar in dem Loslager-Gehäuseflansch-Körper eingearbeitet. Besonders bevorzugt ist vorgesehen, dass der Festlager-Gehäuseflansch durch eine separate Gewindeschraube an dem korrespondierenden Festlager-Rahmenschenkel befestigt ist.

Grundsätzlich gilt, dass jeweils ein einziger Festlager-Rahmenschenkel, Loslager-Rahmenschenkel, Festlager-Gehäuseflansch und Loslager-Gehäuseflansch vorgesehen sein kann. Die Rahmenschenkel und Gehäuseflansche können jeweils über mehrere Befestigungselemente miteinander verbunden sein. Es können jedoch auch jeweils mehrere einzelne Festlager-Rahmenschenkel, Loslager-Rahmenschenkel, Festlager-Gehäuseflansche und/oder Loslager-Gehäuseflansche vorgesehen sein. Der bzw. die Festlager-Rahmenschenkel und die Loslager-Rahmenschenkel müssen nicht zwangsläufig, in Fahrrad-Querrichtung betrachtet, miteinander fluchten, sondern können auch versetzt zueinander angeordnet sein.

Vorzugsweise ist vorgesehen, dass der zylindrische Bolzenkopf eine Werkzeugaufnahme-Struktur zum Ansetzen eines Drehschlüssels aufweist, die vorzugsweise als Innenvielkant ausgebildet ist.

Gemäß einer bevorzugten Ausgestaltung ist die Antriebseinheit als Mittelmotor ausgebildet, lagert eine Tretkurbelwelle und lagert ein außerhalb des Antriebsgehäuses angeordnetes Abtriebselement, beispielsweise mindestens ein Kettenblatt. Die Tretkurbelwelle ist quer zur Fahrradrahmen-Längsachse angeordnet und hält an jeder Seite jeweils einen Kurbelarm, an deren Enden jeweils ein Tretpedal angeordnet ist. Die Antriebseinheit weist einen elektrischen Traktionsmotor auf, der das Abtriebselement antreibt.

Vorzugsweise ist das Abtriebselement distal des Festlager-Rahmenschenkels angeordnet. Das Abtriebselement ist also näher an dem Festlager-Rahmenschenkel platziert als an dem Loslager-Rahmenschenkel. Auf diese Weise wird sichergestellt, dass die durch das Abtriebselement eingeleiteten und in der Fahrradrahmen-Längsebene liegenden Kräfte im Wesentlichen durch den Kraftschluss zwischen dem Festlager-Rahmenschenkel und dem Festlager-Gehäuseflansch übertragen werden, und in viel geringerem Maße durch das gegenüberliegende Loslager übertragen werden.

Im Folgenden werden zwei Ausführungsbeispiele der Erfindung anhand der Zeichnungen näher erläutert. Es zeigen:
Figur 1 einen schematischen Querschnitt einer ersten Ausführungsform einer Elektrofahrrad-Antriebseinheits-Befestigungsanordnung, die einen einzigen Loslager-Gewindebolzen aufweist, der sowohl die Loslager-Verbindung als auch die Festlager-Verbindung bildet, und
Figur 2 einen schematischen Querschnitt einer zweiten Ausführungsform einer Elektrofahrrad-Antriebseinheits-Befestigungsanordnung, die von einem Loslager-Gewindebolzen und einer separaten Festlager-Gewindeschraube gebildet wird.

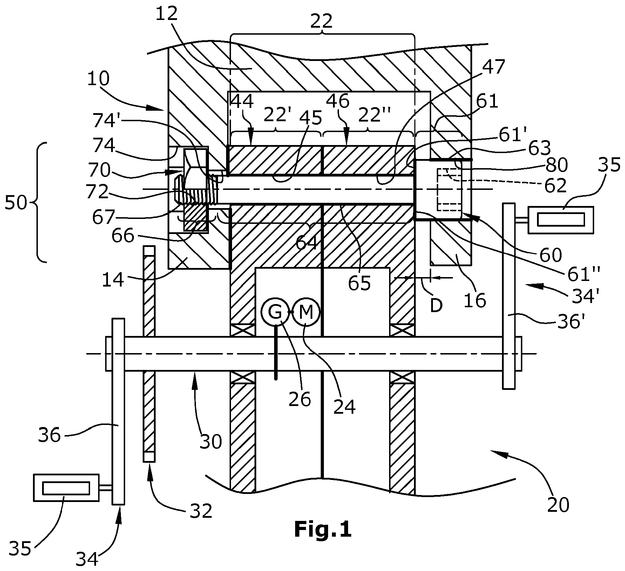

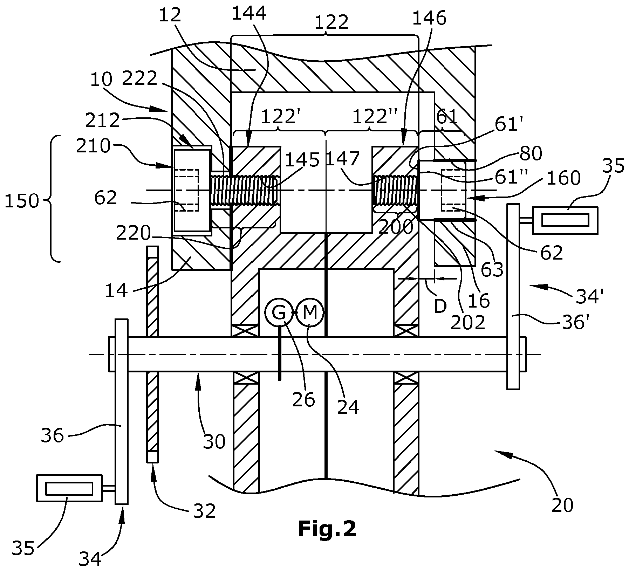

In den Figuren 1 und 2 ist jeweils eine elektrische Mittelmotor-Antriebseinheit 20 dargestellt, die an einem Fahrradrahmen 12 eines nicht weiter dargestellten Pedelec-Elektrofahrrads montiert ist.

Die Antriebseinheit 20 weist eine Lagerung für eine in Querrichtung orientierte Tretkurbelwelle 30 auf, die an ihren seitlichen Wellenenden jeweils eine Tretkurbel 36,36' aufweist, an deren Längsenden wiederum jeweils ein Tretpedal 35 befestigt ist. Die Tretkurbelwelle 30 trägt ferner ein in einer Längsebene liegendes Abtriebselement 32, das vorliegend als Kettenblatt ausgebildet ist, durch das eine Antriebskette angetrieben wird, die zu einem Hinterrad-Ritzel führt. Die Tretkurbelwelle 30 bildet vorliegend auch die Abtriebswelle, da auch der elektrische Traktionsmotor 24 über ein Antriebs-Getriebe 26 die Tretkurbelwelle 30 unmittelbar antreibt. Grundsätzlich kann die Antriebseinheit 20 jedoch auch anders aufgebaut sein: So kann beispielsweise die Tretlagerwelle getrennt von einer Abtriebswelle, die das Abtriebselement 32 antreibt, ausgebildet sein. Die Antriebseinheit 20 weist ein Gehäuse 22;122 auf, in dem sich jeweils der Traktionsmotor 24 und das Antriebs-Getriebe 26 befinden, wohingegen das Abtriebselement 34 außerhalb des Gehäuses 22; 122 angeordnet ist.

Das Gehäuse 22;122 setzt sich im Wesentlichen jeweils aus zwei Gehäusehälften 22',22";122',122" zusammen, die jeweils eine, in Fahrtrichtung gesehen, linke bzw. Festlager-seitige Gehäusehälfte 22';122' und eine rechte bzw. Loslager-seitige Gehäusehälfte 22";122" bilden. Unter einer Gehäusehälfte ist vorliegend nicht zu verstehen, dass diese jeweils genau oder annähernd die Hälfte des jeweiligen Gehäuses 22; 122 bildet, sondern es kann sich hierbei beispielsweise auch um einen Gehäuse-Topf einerseits und einen Gehäuse-Deckel andererseits handeln.

Die Antriebseinheit 20 ist jeweils durch eine Befestigungsanordnung 50; 150 an dem Fahrradrahmen 12 befestigt. Der Fahrradrahmen 12 weist hierzu jeweils eine Antriebsaufnahme 10 auf, an der die Antriebseinheit 20 mit geeigneten Befestigungsmitteln befestigt ist.

Die Antriebsaufnahme 10 wird im Wesentlichen von zwei in einer Längsebene liegenden Rahmenschenkeln 14,16 des Fahrradrahmens 12 gebildet, die in Querrichtung beabstandet und parallel zueinander angeordnet sind, und die einstückig mit dem Fahrradrahmen 12 ausgebildet sind. Die beiden Rahmenschenkel 14,16 und der Fahrradrahmen 12 definieren einen im Querschnitt U-förmigen Aufnahmerahmen, in den innenseitig zwei korrespondierende Gehäuseflansche 44,46;144,146 des Gehäuses 22;122 eingesetzt sind. In den beiden Ausführungsbeispielen bilden der linke Rahmenschenkel 14 und der linke Gehäuseflansch 44;144 zusammen jeweils ein Festlager, und bilden der rechte Rahmenschenkel 16 und der rechte Gehäuseflansch 46;146 zusammen jeweils ein Loslager.

In dem in der Figur 1 dargestellten ersten Ausführungsbeispiel der Befestigungsanordnung 50 erstrecken sich die beiden Gehäuseflansche 44,46 in Querrichtung jeweils über die gesamte Breite des Antriebsgehäuses 22, sodass die beiden Gehäuseflansche 44,46 unmittelbar aneinander anliegen.

Der Loslager-Rahmenschenkel 16 weist eine durchgehend zylindrische Loslager-Zylinderbohrung 80 auf. Die beiden Gehäuseflansche 44,46 weisen jeweils eine durchgehende und gewindelose Steckbohrung 45,47 auf. Der Festlager-Rahmenschenkel 14 weist eine zylindrische Steckbohrung 74' und eine vielflächige Mutterkammer 74 auf, in die eine separate Gewindemutter 70 mit einem Innengewinde 72 drehfest eingelegt ist. Der Innenkreis-Durchmesser der Mutterkammer 74 ist größer als der Innendurchmesser der zylindrischen Steckbohrung 74'. Die Loslager-Zylinderbohrung 80, die beiden Gehäuseflansch-Steckbohrungen 45,47, die Rahmenschenkel-Steckbohrung 74' und die Gewindemutter 74 sind axial in Querrichtung exakt miteinander ausgerichtet, weisen also eine gemeinsame Axiale auf.

Das Loslager-Befestigungselement wird vorliegend von einem Loslager-Gewindebolzen 60 gebildet, der einen zylindrischen Bolzenkopf 61, einen sich daran anschließenden gewindelosen zylindrischen Bolzenschaft 64 und daran anschließend einen Gewindeabschnitt 66 mit einem Außengewinde 67 aufweist. Das Gewindebolzen-Außengewinde 67 korrespondiert zu dem Gewindemutter-Innengewinde 72 und ist in dieses eingeschraubt. Der Loslager-Gewindebolzen 60 steckt mit der Außenzylinder-Oberfläche 63 des Bolzenkopfs 61, dessen Außendurchmesser größer ist als der Außendurchmesser des Bolzenschafts 64 und des Gewindeabschnitts 66, völlig spielfrei und in gewissem Maße verklemmt in der Loslager-Zylinderbohrung 80.

An dem Bolzenkopf ist im Übergang zu dem Bolzenschaft 64 eine proximale Bolzenkopf-Ringstufe 61' gebildet, die unmittelbar an einem Öffnungsrand 61" der distalen Seite des Loslager-Gehäuseflansches kraftschlüssig anliegt, da der Gewindebolzen-Gewindeabschnitt 66 fest mit dem korrespondierenden Innengewinde 72 verschraubt ist, das dem Festlager-Rahmenschenkel 14 zugeordnet ist. Hierdurch werden der Festlager-Rahmenschenkel 14 und die beiden Gehäuseflansche 44,46 sandwichartig zusammengepresst, sodass auch der Festlager-Gehäuseflansch 44 unmittelbar an dem Festlager-Rahmenschenkel 14 anliegt und an diesem kraftschlüssig fixiert ist.

Der Bolzenschaft 64 steckt weitgehend spielfrei in den beiden Gehäuseflansch-Steckbohrungen 45,47 und hält auf diese Weise zusätzlich das Antriebseinheit-Gehäuse 22 in der Antriebsaufnahme 10.

Der Bolzenkopf 61 überbrückt den praktisch unvermeidlichen Toleranzspalt D zwischen dem Loslager-Rahmenschenkel 16 und dem Loslager-Gehäuseflansch 46. Der Bolzenkopf 61 weist eine Werkzeugaufnahme-Struktur 62 in Form eines Innenvielkants zum Ansetzen eines Drehschlüssels auf.

Die Montage erfolgt, indem zunächst die beiden Steckbohrungen 45,47 der Antriebseinheit 20 axial mit der Loslager-Zylinderbohrung 80 und der Rahmenschenkel-Steckbohrung 74' ausgerichtet werden. Anschließend wird der Loslager-Gewindebozen 60 in die Loslager-Zylinderbohrung 80 und die Steckbohrungen 45,47 eingesteckt, sodass der Gewindebolzen-Gewindeabschnitt 66 in das korrespondierende Innengewinde 72 mit Hilfe des angesetzten Drehschlüssels eingeschraubt werden kann, bis die Bolzenkopf-Ringstufe 61' an den Öffnungsrand 61" des Loslager-Gehäuseflansches 46 anschlägt. Der Gewindebolzen 60 wird mit einem hohen Drehmoment angezogen, so dass der Festlager-Gehäuseflansch 44 unmittelbar und kraftschlüssig an dem Festlager-Rahmenschenkel 14 anliegt und auch die Bolzenkopf-Ringstufe 61' an dem Öffnungsrand 61" des Loslager-Gehäuseflansches 46 unmittelbar und kraftschlüssig anliegt. Der Bolzenkopf 61 steckt in dieser Montageposition mit dem größten Teil seiner axialen Länge in der Loslager-Zylinderbohrung 80.

In dem in der Figur 2 dargestellten zweiten Ausführungsbeispiel wird durch den Loslager-Gewindebolzen 160 ausschließlich die Loslager-Befestigung realisiert, nicht jedoch die Festlager-Befestigung. Der Loslager-Gehäuseflansch 146 und der Festlager-Gehäuseflansch 144 sind nicht aneinander anliegend ausgebildet, sondern beabstandet zueinander angeordnet und werden durch separate Befestigungselemente an dem jeweils zugeordneten Rahmenschenkel 16,14 befestigt.

Hierzu weist der Loslager-Gewindebolzen 160 einen Gewindeabschnitt 202 mit einem Außengewinde 200 auf, das unmittelbar an den Bolzenkopf 80 angrenzt und in ein korrespondierendes Innengewinde 140 in dem Loslager-Gehäuseflansch 146 eingeschraubt ist. Das Festlager weist ein separates Festlager-Befestigungselement auf, das als Festlager-Gewindeschraube 210 mit einem Schraubenkopf 212 und einem Gewindeabschnitt 220 mit einem Außengewinde 222 ausgebildet ist, wobei der Gewindeabschnitt 220 in ein korrespondierendes Innengewinde 145 in dem Festlager-Gehäuseflansch 144 eingeschraubt ist. Die Festlager-Gewindeschraube 210 ist so fest angezogen, dass sich zwischen dem Festlager-Rahmenschenkel 14 und dem Festlager-Gehäuseflansch 144 eine kraftschlüssige Fixierung ergibt.

## Patentansprüche

1. Elektrofahrrad-Antriebseinheits-Befestigungsanordnung (50;150) zur Befestigung einer elektrischen Antriebseinheit (20) an einer Antriebsaufnahme (10) eines Fahrradrahmens (12),
wobei der Fahrradrahmen (12) einen Festlager-Rahmenschenkel (14) und einen parallelen Loslager-Rahmenschenkel (16) aufweist,
wobei ein Antriebseinheit-Gehäuse (22) einen Festlager-Gehäuseflansch (44;144) und einen parallelen Loslager-Gehäuseflansch (46;146) aufweist,
wobei der Festlager-Gehäuseflansch (44;144) unmittelbar an dem Festlager-Rahmenschenkel (14) anliegend an diesem kraftschlüssig befestigt ist, und
wobei ein Loslager-Befestigungselement zur Befestigung des Loslager-Gehäuseflansches (46;146) an dem Loslager-Rahmenschenkel (16) vorgesehen ist,
wobei das Loslager-Befestigungselement als Loslager-Gewindebolzen (60; 160) ausgebildet ist, **dadurch gekennzeichnet, dass** der Loslager Gewindebolzen (60; 160) einen zylindrischen Bolzenkopf (61) aufweist, der radialspielfrei in einer Loslager-Zylinderbohrung (80) des Loslager-Rahmenschenkels (16) sitzt, und einen Gewindeabschnitt (66;200) mit einem Außengewinde (67;202) aufweist, der in einem korrespondierenden Innengewinde (72;147) an dem Festlager-Rahmenschenkel (14) oder an einem der Gehäuseflansche (146) verschraubt ist.

2. Elektrofahrrad-Antriebseinheits-Befestigungsanordnung (50) nach Anspruch 1, wobei das Innengewinde (72), mit dem der Gewindebolzen-Gewindeabschnitt (66) verschraubt ist, dem Festlager-Rahmenschenkel (14) zugeordnet ist.

3. Elektrofahrrad-Antriebseinheits-Befestigungsanordnung (50) nach Anspruch 2, wobei an dem Festlager-Rahmenschenkel (14) eine separate Gewindemutter (70) drehfest angeordnet ist, die das dem Festlager-Rahmenschenkel (14) zugeordnete Innengewinde (72) aufweist.

4. Elektrofahrrad-Antriebseinheits-Befestigungsanordnung (50) nach einem der vorangegangenen Ansprüche, wobei die beiden Gehäuseflansche (44,46) jeweils eine gewindelose Steckbohrung (45, 47) aufweisen, durch die ein Bolzenschaft (64) des Loslager-Gewindebolzens (60) durchgesteckt ist.

5. Elektrofahrrad-Antriebseinheits-Befestigungsanordnung (50) nach einem der vorangegangenen Ansprüche, wobei die beiden Gehäuseflansche (44,46) unmittelbar aneinander anliegen.

6. Elektrofahrrad-Antriebseinheits-Befestigungsanordnung (50;150) nach einem der vorangegangenen Ansprüche, wobei der Außendurchmesser des Bolzenkopfes (61) größer ist als der Außendurchmesser des Gewindeabschnitts (66;200) und eine proximale Bolzenkopf-Ringstufe (61') an einem Öffnungsrand (61") des Loslager-Gehäuseflansches (46;146) unmittelbar anliegt.

7. Elektrofahrrad-Antriebselnheits-Befestigungsanordnung (150) nach Anspruch 1, wobei das mit dem Gewindebolzen-Gewindeabschnitt (200) korrespondierende Innengewinde (147) in dem Loslager-Gehäuseflansch (146) vorgesehen ist.

8. Elektrofahrrad-Antriebseinheits-Befestigungsanordnung (150) nach Anspruch 7, wobei der Festlager-Gehäuseflansch (144) durch eine separate Gewindeschraube (210) an dem Festlager-Rahmenschenkel (14) befestigt ist.

9. Elektrofahrrad-Antriebseinheits-Befestigungsanordnung (50;150) nach einem der vorangegangenen Ansprüche, wobei der zylindrische Bolzenkopf (61) eine Werkzeugaufnahme-Struktur (62) zum Ansetzen eines Drehschlüssels aufweist, die vorzugsweise als Innenvielkant ausgebildet ist.

10. Elektrofahrrad-Antriebseinheits-Befestigungsanordnung (50;150) nach einem der vorangegangenen Ansprüche, wobei die Antriebseinheit (20) ein Mittelmotor ist, eine Tretkurbelwelle (30) lagert und ein außerhalb des Antriebsgehäuses (20) angeordnetes Abtriebselement (32) antreibt.

11. Elektrofahrrad-Antriebseinheits-Befestigungsanordnung (50;150) nach Anspruch 10, wobei das Abtriebselement (32) distal des Festlager-Rahmenschenkels (14) angeordnet ist.

## Claims

1. Electric bicycle drive unit mounting arrangement (50;150) for attaching an electric drive unit (20) to a drive receptacle (10) of a bicycle frame (12),
wherein the bicycle frame (12) comprises a fixed bearing frame leg (14) and a parallel loose bearing frame leg (16),
wherein a drive unit housing (22) comprises a fixed bearing housing flange (44;144) and a parallel loose bearing housing flange (46;146),
said fixed bearing housing flange (44;144) being frictionally attached directly to said fixed bearing frame leg (14), and
wherein a loose bearing fastening element is provided for attaching the loose bearing housing flange (46;146) to the loose bearing frame leg (16),
wherein
the loose bearing fastening element is configured as a loose bearing threaded bolt (60; 160),
**characterised in that**
the loose bearing threaded bolt (60; 160) comprises a cylindrical bolt head (61) which is seated without radial play in a loose bearing cylinder bore (80) of the loose bearing frame leg (16) and comprises a threaded portion (66; 200) with an external thread (67; 202) which is screwed into a corresponding internal thread (72; 147) on the fixed bearing frame leg (14) or on one of the housing flanges (146).

2. Electric bicycle drive unit mounting assembly (50) of claim 1, wherein the internal thread (72) to which the threaded bolt threaded portion (66) is threaded is associated with the fixed bearing frame leg (14).

3. Electric bicycle drive unit mounting assembly (50) according to claim 2, wherein a separate threaded nut (70) is non-rotatably arranged on the fixed bearing frame leg (14), which comprises the internal thread (72) associated with the fixed bearing frame leg (14).

4. Electric bicycle drive unit mounting arrangement (50) according to any of the preceding claims, wherein the two housing flanges (44, 46) respectively comprise a threadless plug-in bore (45, 47) through which a bolt shank (64) of the loose bearing threaded bolt (60) is inserted.

5. Electric bicycle drive unit mounting arrangement (50) according to any one of the preceding claims, wherein the two housing flanges (44, 46) are in direct contact with each other.

6. Electric bicycle drive unit mounting arrangement (50;150) according to any one of the preceding claims, wherein the outer diameter of the bolt head (61) is larger than the outer diameter of the threaded portion (66;200) and a proximal bolt head annular step (61') directly abuts an opening edge (61") of the loose bearing housing flange (46;146).

7. Electric bicycle drive unit mounting arrangement (150) according to claim 1, wherein the internal thread (147) corresponding to the threaded bolt threaded portion (200) is provided in the loose bearing housing flange (146).

8. Electric bicycle drive unit mounting assembly (150) of claim 7, wherein the fixed bearing housing flange (144) is attached to the fixed bearing frame leg (14) by a separate threaded bolt (210).

9. Electric bicycle drive unit mounting arrangement (50;150) according to any one of the preceding claims, wherein the cylindrical bolt head (61) comprises a tool-receiving structure (62) for the application of a rotary spanner, preferably configured as an internal polygon.

10. Electric bicycle drive unit mounting arrangement (50;150) according to any one of the preceding claims, wherein the drive unit (20) is a middle motor, supports a pedal crankshaft (30) and drives an output member (32) arranged outside the drive housing (20).

11. Electric bicycle drive unit mounting arrangement (50;150) according to claim 10, wherein the output element (32) is arranged distal to the fixed bearing frame leg (14).

## Revendications

1. Arrangement de montage d'unité d'entraînement de bicyclette électrique (50 ; 150) pour fixer une unité d'entraînement électrique (20) à un réceptacle d'entraînement (10) d'un cadre de bicyclette (12),
dans lequel le cadre de bicyclette (12) comprend un bras de cadre à palier fixe (14) et un bras de cadre à palier libre parallèle (16), dans lequel un logement d'unité d'entraînement (22) comprend une bride de logement de palier fixe (44 ; 144) et une flasque de logement de palier libre parallèle (46; 146),
ladite flasque de logement de palier fixe (44; 144) étant fixée par friction directement sur ledit bras de cadre de palier fixe (14), et dans lequel un élément de fixation de palier libre est prévu pour fixer la flasque de logement de palier libre (46; 146) au bras de cadre de palier libre (16),
dans lequel
l'élément de fixation de palier libre est configuré comme un boulon fileté de palier libre (60; 160),
**caractérisé en ce que**
le boulon fileté pour palier libre (60; 160) comprend une tête de boulon cylindrique (61) qui est logée sans jeu radial dans un alésage cylindrique pour palier libre (80) du bras de cadre pour palier libre (16) et comprend une partie filetée (66 ; 200) avec un filet extérieur (67 ; 202) qui est vissé dans un filet intérieur correspondant (72; 147) sur le bras de cadre pour palier fixe (14) ou sur l'une des flasques de logement (146).

2. Ensemble de montage d'unité d'entraînement de bicyclette électrique (50) de la revendication 1, dans lequel le filetage interne (72) sur lequel la partie filetée du boulon (66) est vissée est associé au bras de cadre de palier fixe (14).

3. Ensemble de montage d'unité d'entraînement de bicyclette électrique (50) selon la revendication 2, dans lequel un écrou fileté séparé (70) est agencé de manière non rotative sur le bras de cadre de palier fixe (14), qui comprend le filetage interne (72) associé au bras de cadre de palier fixe (14).

4. Arrangement de montage d'unité d'entraînement de bicyclette électrique (50) selon l'une quelconque des revendications précédentes, dans lequel les deux flasques de logement (44, 46) comprennent respectivement un alésage enfichable non fileté (45, 47) à travers lequel une tige de boulon (64) du boulon fileté de palier libre (60) est insérée.

5. Arrangement de montage d'unité d'entraînement de bicyclette électrique (50) selon l'une quelconque des revendications précédentes, dans lequel les deux flasques de boîtier (44, 46) sont en contact direct l'une avec l'autre.

6. Arrangement de montage d'unité d'entraînement de bicyclette électrique (50; 150) selon l'une quelconque des revendications précédentes, dans lequel le diamètre extérieur de la tête de boulon (61) est plus grand que le diamètre extérieur de la partie filetée (66 ; 200) et un échelon annulaire proximal de la tête de boulon (61') vient directement en butée contre un bord d'ouverture (61") de la flasque de logement de palier libre (46; 146).

7. Arrangement de montage d'unité d'entraînement de bicyclette électrique (150) selon la revendication 1, dans lequel le filetage interne (147) correspondant à la partie filetée du boulon (200) est prévu dans la flasque de logement de palier libre (146).

8. Ensemble de montage d'unité d'entraînement de bicyclette électrique (150) selon la revendication 7, dans lequel la flasque de logement de palier fixe (144) est fixée au bras de cadre de palier fixe (14) par un boulon fileté séparé (210).

9. Arrangement de montage d'unité d'entraînement de bicyclette électrique (50; 150) selon l'une quelconque des revendications précédentes, dans lequel la tête de boulon cylindrique (61) comprend une structure de réception d'outil (62) pour l'application d'une clé rotative, de préférence configurée comme un polygone interne.

10. Arrangement de montage d'unité d'entraînement de bicyclette électrique (50; 150) selon l'une quelconque des revendications précédentes, dans lequel l'unité d'entraînement (20) est un moteur central, supporte un vilebrequin de pédale (30) et entraîne un élément de sortie (32) disposé à l'extérieur du boîtier d'entraînement (20).

11. Arrangement de montage de l'unité d'entraînement de la bicyclette électrique (50; 150) selon la revendication 10, dans lequel l'élément de sortie (32) est disposé de manière distale par un bras du cadre à palier fixe (14).
